# EUROPÄISCHE PATENTSCHRIFT

(11) **EP 3 027 543 B1**
(45) Veröffentlichungstag und Bekanntmachung des Hinweises auf die Patenterteilung: **30.08.2017**
(21) Anmeldenummer: 14738780.7
(22) Anmeldetag: 01.07.2014
(51) Int. Cl.: B65G 47/244, B65G 54/02

(54) **PALETTIERVORRICHTUNG FÜR VERPACKUNGSEINHEITEN**
PALLETISING APPARATUS FOR PACKAGING UNITS
INSTALLATION DE PALETTISATION POUR DES UNITÉS D' EMBALLAGE

(30) Priorität: 30.07.2013 DE 102013108176
(43) Veröffentlichungstag der Anmeldung: 08.06.2016
(73) Patentinhaber: KHS GmbH, 44143 Dortmund (DE)
(72) Erfinder: JÖRISSEN, Michael, 47551 Bedburg-Hau (DE)
(86) Internationale Anmeldenummer: PCT/EP2014/064004
(87) Internationale Veröffentlichungsnummer: WO 2015/014559

(56) Entgegenhaltungen:
- EP-A1- 1 123 886
- EP-A1- 1 260 467
- EP-A1- 2 163 498
- DE-C2- 19 757 555
- US-A1- 2010 316 479
- US-B1- 6 257 826

## Beschreibung

Die Erfindung bezieht sich auf eine Palettiervorrichtung nach dem Oberbegriff des Anspruchs 1, welcher Gebinde über ein Zuführelement zugeführt werden, und welche ein von einer Eingangsseite in Richtung zu einer Ausgangsseite orientiert förderndes Förderband sowie zumindest ein Ausrichtförderelement aufweist.

Die Gebinde weisen Behälter auf. Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten bare auch zur Aufnahme von Lebensmitteln geeignet sind, aber auch bereits zu Gruppen (Mehrfachpack, Gebinde) zusammen gefasste Behälter. Behälterbehandlungsanlagen sind zum Beispiel Rinser, Füller, Verschließer aber auch Etikettiermaschinen. Diese können umlaufender Bauart oder linearer Bauart sein. Behälterbehandlungsanlagen umlaufender Bauart weisen einen Transportstern auf, an welchem die Behälter einer Kreisbahn folgend beispielsweise an Etikettiervorrichtungen vorbeigeführt werden. Vor dem Etikettieren können die Behälter nach Erkennungsmerkmalen ausgerichtet sein, so dass jedes Etikett gleich orientiert auf den Behälter aufbringbar ist.

Nachdem die Behälter in der Behälterbehandlungsanlage behandelt wurden, können diese einer Verpackungsmaschine zugeführt werden. Im Detail erfolgt die Herstellung der Gebinde z.B. in einer so genannten Verpackungsmaschine in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen können, da die vormalige Orientierung, also Ausrichtung verloren geht. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und das Verbinden der Behälter jeder Behältergruppe zu dem kompakten und festen bzw. stabilen Gebinde.

Möglich ist, die einzelnen Behälter des Gebindes miteinander zu verbinden, wobei z.B. eine Umschlingung z.B. mit einem Halteband oder einem anderen umfassenden Element denkbar ist. Ein solches umfassendes Element kann zum Beispiel ein Kartonzuschnitt oder ein Folienabschnitt sein, welcher um das betreffliche Gebinde gelegt und entsprechend befestigt wird. Die Kartonenden können miteinander verklebt werden. In einem Schrumpftunnel können die zunächst anliegenden Folien aufgeschrumpft werden. Denkbar ist auch, dass die Gebinde eine stabilisierende Unterlage bekommen, welche z.B. als Kartonzuschnitt ausgeführt ist, auf welcher die Behälter aufstehen. Eine solche Unterlage ist sinnvoll, wenn das spätere Gebinde z.B. aus mehreren Lagen von Teilgebinden gebildet werden soll. Dabei kann an der Unterlage angegriffen werden, so dass das eine Teilgebinde auf das andere gesetzt wird. Anschließend kann ein umfassendes Element vorgesehen werden, um die gestapelten Gebinde zu umfassen. Die Kartonzuschnitte werden als solche bevorzugt im entfalteten Zustand aus einem Magazin entnommen und können vor oder nach Zuführung zu dem späteren Gebinde gefalten werden, wobei eine entsprechend ausgeführte Faltstation Einsatz findet. Zur Bildung der Folienabschnitte wird eine Folienrolle zu einer Folienbahn entrollt, wobei die betrefflichen Folienabschnitte von der Folienbahn abgeschnitten werden. Hierzu ist eine Folienschneidstation sinnvoll einsetzbar, so dass der jeweilige Folienabschnitt die geforderten Dimensionen des jeweils zu verpackenden Gebindes hat. In einer weiteren Ausführung kann zwischen den Behältern der späteren Gebinde ein Abstandselement angeordnet werden, welches z.B. als Steg oder beispielsweise als Gefache ausgeführt ist. Dieses Gefache ist zumeist aus einem Karton gebildet, und wird vor dem Einsetzen in das spätere Gebinde aufgefacht, wobei ein Abstandselementeinsetzer, welcher beispielhaft als Stegeinsetzer oder Gefacheeinsetzer bezeichnet werden kann, Verwendung findet. Ist das Gebinde gebildet und hat gegebenenfalls den Schrumpftunnel verlassen, kann ein Packrouter zur Neuorientierung des Gebindes vorgesehen sein.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aus der EP 2 500 296 A1 kennt man eine Vorrichtung und ein Verfahren zum Gruppieren von Stückgut entlang einer Förderstrecke. Mittels in den Förderstrom eingreifenden Einteilerelementen werden Lücken zwischen einander folgenden Stückgütern ausgebildet. Die Einteilerelemente sind in ihrer Vorschubbewegung und/oder -geschwindigkeit wegen der verwendeten getriebelosen Direktantriebe entlang der Bewegungsbahn individuell steuerbar. Die Einteilerelemente tauchen von unterhalb der Bewegungsbahn auf, teilen eine Anzahl an Behältern von dem Behälterstrom ab, halten den Behälterstrom zunächst auf, so dass zu den abgetrennten Behältern eine Lücke entsteht: Die Einteilerelemente beschleunigen dann und tauchen wieder unter das Niveau der Bewegungsbahn. Insofern kombiniert die EP 2 500 296 A1 die vor deren Anmelde- bzw. Prioritätstag bekannte Einteiltechnik mit Einteilfingern, die auf umlaufenden Balken angeordnet sind, mit einem Antriebssystem, welches durch getriebelose Direktantriebe gebildet ist.

Die DE 10 2011 081 705 A1 beschäftigt sich ebenfalls mit einem Verfahren und einer Vorrichtung zum Gruppieren von Behältern. Dabei weist die Vorrichtung zwei Fördereinrichtungen mit unterschiedlichen Geschwindigkeiten auf. Die zweite Fördereinrichtung ist schneller, als die erste Fördereinrichtung. So werden die, die zweite Fördereinrichtung erreichenden Behälter schneller bewegt als die Behälter auf der zweiten Fördereinrichtung. So entsteht zwischen den Behältern auf der zweiten Fördereinrichtung eine Lücke. Mittels einer Schiebe- oder Rückhalteeinrichtung werden die Behälter auf der zweiten Fördereinrichtung beschleunigt, verzögert und/oder gegeneinander verschoben, so dass die ursprüngliche Lücke verändert ist. Dabei wird z.B. der nacheilende Behälter auf den voreilenden Behälter geschoben. Die entsprechende Beschleunigung wird mittels linearmotorischer Antriebe erreicht, wobei die einzelnen Elemente der Schiebe- oder Rückhalteeinrichtung individuell steuerbar sind.

Die in der Verpackungsmaschine hergestellten Gebinde können in der Palettiervorrichtung palettiert werden. Die Palettiervorrichtung kann natürlich als Komponente der Verpackungsmaschine angesehen werden. Eine solche Palettiervorrichtung nach dem Oberbegriff des Anspruchs 1 ist zum Beispiel in der DE 197 57 555 C2 offenbart. Mit der dort offenbarten Palettiervorrichtung soll es möglich sein, Einzelgebinde, die mit einer Zuführeinrichtung in vorbestimmter Ausrichtung auf ein über ein Tisch laufendes Förderband transportiert werden, jeweils mit einem an einer Lineareinheit angeordneten Greifer zu greifen, um 90° zur Transportrichtung des Förderbandes auf diesem seitlich zu verschieben und außerdem zu drehen. Nachdem das jeweilige Gebinde seine Einzelposition erreicht hat, wird der Greifer geöffnet und fährt in seine Wartestellung zurück, um das nächste Gebinde zu greifen. Mit Hilfe des Greifers werden die jeweiligen Einzelgebinde somit lediglich relativ zum Förderband transversal bewegt, wobei eine longitudinale Relativbewegung nicht stattfindet. Nachteilig ist aber, dass eine Vielzahl von Lineareinheiten vorgesehen sind, welche sich winklig zum Förderband erstrecken. Der Greifer wird mittels eines Zahnriemenantriebs in Richtung der Längsachse der Lineareinheit hin und her bewegt. An jeder Lineareinheit ist auch nur ein Greifer vorgesehen, was auch sinnvoll ist, da jeder Greifer nur an einer Seite der Lineareinheit angeordnet werden kann, da sich zwei oder mehr Greifer an einer Lineareinheit in ihrer Bewegungsfreiheit beeinträchtigen würden. Gleichwohl könnten die singulären Greifer an den Lineareinheiten unabhängig voneinander betrieben werden. Dies bedeutet im Sinne der DE 197 57 555 C2 jedoch lediglich, dass der einzelne Greifer einer Lineareinheit unabhängig von dem anderen, singulären Greifer an den anderen Lineareinheiten betreibbar ist. Zudem überragen die Lineareinheiten das Förderband seitlich, so dass ein notwendiger Montageraum der Palettiervorrichtung an die überstehenden Lineareinheiten angepasst sein muss, was bei den sehr begrenzten Montageräumen sehr nachteilig ist.

Aufgabe der Erfindung ist es, eine Palettiervorrichtung der eingangs genannten Art anzugeben, bei welcher zumindest die vorgenannten Nachteile aufgehoben sind.

Die Lösung dieser Aufgabe gelingt mit einer Palettiervorrichtung mit den Merkmalen des Patentanspruchs 1.

Weiterbildungen, Vorteile und Anwendungsmöglichkeiten der Erfindung ergeben sich auch aus der nachfolgenden Beschreibung von Ausführungsbeispielen.

Erfindungsgemäß ist vorgesehen, dass der Lineartransporteur als elektromagnetischer Direktantrieb ausgeführt ist und der Lineartransporteur an Hintrum und Rücktrum zwei Teilabschnitte aufweist, zwischen denen Bogenabschnitte angeordnet sind.

Dass die Bewegungselemente im Wesentlichen in einer gemeinsamen Richtung umlaufen, bedeutet im Sinne der Erfindung, dass die Bewegungselemente gegebenenfalls vereinzelt und kurzzeitig in eine andere Richtung als die gemeinsame, eigentlich vorgegebene Umlaufrichtung bewegt werden können, wenn dies nach den gegebenen Umständen zum Ausrichten oder Verändern eines Abstandes zum folgenden oder vorlaufenden Bewegungselement sinnvoll erscheint. Hier liegt aber auch ein weiterer Vorteil der Erfindung, indem die Bewegungselemente unabhängig voneinander an der einzigen Bewegungsbahn in ihrer jeweiligen Bewegung ansteuerbar sind, worauf aber noch eingegangen wird.

Der Lineartransporteur weist eine geschlossene Bewegungsbahn auf, an welcher die einzelnen Bewegungselemente angeordnet sind, welche umlaufen. Die Bewegungsbahn weist dazu linear ausgerichtete Bewegungsbahnabschnitte und dazwischen angeordnete Umlenkbereich auf, so dass eine geschlossene Bewegungsbahn gebildet ist. Die Bewegungselemente sind individuell ansteuerbar, so dass jedes Bewegungselement eine jeweilige Geschwindigkeit haben kann. So sind die Bewegungselemente unabhängig voneinander so steuerbar, dass das jeweilige Bewegungselement an dem jeweiligen Bewegungsbahnabschnitt in seiner Geschwindigkeit gleich zu anderen an den betreffenden Bewegungsbahnabschnitt befindlichen Bewegungselementen ist, wobei dieses betreffliche Bewegungselement relativ zu anderen an derselben Bewegungsbahn respektive an demselben Bewegungsbahnabschnitt befindlichen Bewegungselementen aber auch beschleunigt, verzögert oder gar in seiner Bewegungsrichtung kurzeitig umgekehrt werden kann. Dies ist vorteilhaft, das so eine sehr geringe Anzahl an Bewegungselementen vorgesehen werden kann, da die sich entlang eines Rücktrums bewegenden Bewegungselemente die sich entlang eines Hintrums bewegenden Bewegungselemente überholen können. Die Bewegungsbahn kann selbstverständlich eine Schleuse zum Ausschleusen nicht benötigter oder zu überprüfender Bewegungselemente aufweisen. Durch die Schleuse kann selbstverständlich auch zum Einschleusen genutzt werden. Die jeweiligen Bewegungselemente können z.B. so angesteuert werden, dass diese bei einer Übernahme der Gebinde mit angepasster Geschwindigkeit bewegt werden und nachfolgend einen Geschwindigkeitsaufbau erfahren, so dass quasi eine sanfte Übernahme der Gebinde erfolgt, welche entlang z.B. eines Beschleunigungsabschnittes der Bewegungsbahn zu den nachfolgenden beabstandet werden.

Der Lineartransporteur ist in der Art einer elektromagnetischen Bahn ausgeführt, wobei die Bewegungselemente getriebelos an dieser direkt ansteuerbar umlaufen, wobei die jeweils gewünschte Geschwindigkeit des jeweiligen Bewegungselementes individuell ansteuerbar ist. Dazu ist eine Schnittstelle der Bewegungsbahn mit einer Steuereinheit verbindbar. Der Lineartransporteur ist demnach als elektromagnetischer Direktantrieb ausgeführt. Dabei erfolgt der eigentliche Antrieb durch ein dynamisch, steuerbares elektromagnetisches Feld entlang der Schiene oder Bahn, wodurch der auf dem Bewegungselement, das auch als Mover bezeichnet werden kann angeordnete Permanentmagnet/-packung durch die magnetische Kraft bzw. das Magnetfeld gesteuert bewegt wird.

Die an den Bewegungselementen angeordneten Greifer können bezogen auf den Lineartransporteur, aber auch bezogen auf das Förderband jede Bewegung ausführen, sind also entsprechend in ihren Freiheitgraden ansteuerbar. Ein Ansteuern erfolgt in idealer Ausführung über eine zentrale Einheit, welche auch die Steuerung der Bewegungselemente bewirkt.

Ersichtlich ist der Vorteil der Erfindung, dass ein einziger Lineartransporteur die bisher erforderliche Mehrzahl an Lineareinheiten ersetzt, um die Gebinde wunschgemäß zu palettieren. Zudem ist der Lineartransporteur in seinen Dimensionen so ausführbar, dass dieser das Förderband, also den damit optional zugeordneten Tisch an keiner Stelle überragt, so dass auch der erforderliche Montageraum nur an die Ausgestaltung des sogenannten Ausrichttisches angepasst werden muss.

In einer bevorzugten Ausgestaltung ist der Lineartransporteur zu der Eingangsseite des Förderbandes beabstandet. Die auf das Förderband geführten Gebinde werden mittels des Förderbandes beschleunigt und so zu den folgenden Gebinden beabstandet. Erreicht das betreffende Gebinde den Lineartransporteur, übernimmt ein Bewegungselement, also der daran angeordnete Greifer das Gebinde und fördert dieses entlang der Bewegungsbahn.

Bei dieser Ausgestaltung weist der Lineartransporteur eine schräg zur Transportrichtung des Förderbandes ausgerichtete Orientierung auf. Dabei weist die Bewegungsbahn einen Hintrum und eines Rücktrum sowie jeweils dazwischen angeordnete Umlenkbereiche auf. Entlang des Hintrums werden die Gebinde in die gewünschte Position verbracht, welche diese in dem gewünschten Palettiermuster einnehmen sollen. Dazu sind die Bewegungselemente, aber auch die daran angeordneten Greifer entsprechend ansteuerbar. Hat das Gebinde die gewünschte Position erreicht, wird das Gebinde freigegeben und mittels des Förderbandes, welches z.B. als Mattenkette ausgeführt sein kann, zu einer Sammelstation transportiert. Dabei können die Bewegungselemente, also auch deren Greifer so angesteuert werden, dass ein einzelnes oder mehrere Gebinde gleichzeitig freigegeben werden können.

Ist das Gebinde freigegeben, wird das Bewegungselement, idealerweise entlang des Rücktrums beschleunigt, um so ein weiteres Gebinde übernehmen zu können. Möglich ist natürlich auch, dass betreffliche Bewegungselement bereits mit Freigabe des Gebindes, also schon entlang eines Teilabschnittes des Hintrums und/oder des betreffenden Umlenkbereiches beschleunigt wird.

Nach der Erfindung weist der Lineartransporteur, also seine Bewegungsbahn einen Hintrum und einen Rücktrum auf, welche jeweils zumindest zwei Teilabschnitte aufweisen. In einer bevorzugten Ausgestaltung beginnt ein erster Teilabschnitt des Hintrums an einem Einlauf des Zuführelementes, und erstreckt bis zu einem Bogenabschnitt parallel zu einer Längsseite des Förderbandes, also der Maschenkette in Richtung zu einer Ausgangsseite. An den Bogenabschnitt schließt sich ein zweiter Teilabschnitt an, welcher sich sodann schräg orientiert in Richtung zur gegenüberliegenden Längsseite erstreckt. An diesen zweiten Teilabschnitt schließt sich der erste Umlenkbereich zum Rücktrum an, so dass ein erster Teilabschnitt des Rücktrum parallel zu entsprechenden Längsseite in Richtung zur Eingangsseite verläuft. An diesen ersten Teilabschnitt des Rücktrums schließt sich wiederum ein Bogenabschnitt an, an den sich ein zweiter Teilabschnitt des Rücktrums anschließt, welcher an dem zweiten Umlenkbereich endet. Der zweite Teilabschnitt des Rücktrums ist schräg in Richtung zum ersten Teilabschnitt des Hintrums verlaufend orientiert. Die beiden zweiten Teilabschnitte weisen dabei einen Winkelbetrag zur jeweiligen Längsseite auf. Der zweite Teilabschnitt ist also bevorzugt parallel zum zweiten Teilabschnitt des Hintrums. Gleiches gilt für die ersten Teilabschnitte des Hin- und Rücktrums. Der Lineartransporteur gemäß dieser möglichen Ausgestaltung hat in Aufsicht gesehen eine quasi einem Parallelogramm ähnliche Form.

So wird vorteilhaft ein Lineartransporteur zur Verfügung gestellt, welcher mit seiner Bewegungsbahn quasi in die Breite gezogen ist.

Der Lineartransporteur, also das jeweilige Bewegungselement kann das jeweilige Gebinde direkt von dem Zuführelement am Einlauf übernehmen. Möglich ist zunächst die Position des Gebindes zu ermitteln, wozu Erfassungselemente, wie z.B. Beispiel Sensoren vorgesehen sein können. Diese können bevorzugt an der Übernahme angeordnet sein, weswegen dieser Teilabschnitt des ersten Teilabschnittes des Hintrums auch als Erfassungsstrecke bezeichnet werden kann. Entlang des ersten Teilabschnittes des Hintrums, können die Bewegungselemente beschleunigt werden, so dass die Gebinde zu den Folgenden beabstandet werden können. Dies kann auch schon entlang der Erfassungstrecke beginnen, wobei die Erfassungstrecke als Bestandteil des ersten Teilabschnittes des Hintrums angesehen werden kann. So kann eine sanfte Beschleunigung entlang des ersten Teilabschnittes des Hintrums erfolgen, wobei die Gebinde den Einlauf mit einer relativ geringen Geschwindigkeit erreichen, und nach der Übernahme durch die Bewegungselemente entlang des ersten Teilabschnittes des Hintrums kontinuierlich auf die gewünschte Geschwindigkeit beschleunigt werden. Entlang dieses ersten Teilabschnittes des Hintrums kann aber vorteilhaft auch nur ein Teil der notwendigen Beabstandung erreicht werden, welcher zur Drehung, also zum Ausrichten Gebindes in die gewünschte Palettierposition erforderlich ist. Der übrige Teil könnte entlang des zweiten Teilabschnittes des Hintrums, also beispielsweise entlang eines Anfangsabschnittes davon erfolgen.

Entlang des zweiten Teilabschnittes des Hintrums wird bevorzugt das Gebinde in die gewünschte Position überführt, wobei aber auch noch eine Beschleunigung stattfinden kann, wie oben bereits erwähnt. Hat das Gebinde die gewünschte Position hinsichtlich der Ausrichtung und der Position in der späteren palettierfähigen Lage erreicht, lässt der Greifer das Gebinde frei, so dass dieses mittels des Förderbandes, also mittels der beispielhaften Maschenkette zu einer Sammelstation an der Ausgangseite gefördert wird. Auch hier kann ein einzelnes Gebinde freigegeben werden, wobei aber auch mehrere Gebinde gleichzeitig freigegeben werden können.

Nach dem die Gebinde die Sammelstation erreicht haben, können diese zunächst in einer unverdichteten Lage weitergefördert werden. Bevorzugt ist, dass Anschlags- und/oder Verdichtungselemente vorhanden sind, so dass eine verdichtete Lage gebildet werden kann.

In einer weiter möglichen Ausgestaltung des Lineartransporteurs weist dieser in Aufsicht gesehen eine umgekehrt L-förmige Ausgestaltung auf. Dabei kann vorgesehen sein, dass der Hintrum kürzer ist als der Rücktrum. Wie zuvor beschrieben weisen sowohl der Hintrum als auch der Rücktrum zwei Teilabschnitte auf, zwischen denen Bogenabschnitte angeordnet sind. Im Unterschied zu den zuvor genannten Ausführungsbeispielen, ist der erste Teilabschnitt des Hintrums parallel zu dem zweiten Teilabschnitt des Rücktrums, wobei der zweite Teilabschnitt des Hintrums parallel zu dem ersten Teilabschnitt des Rücktrum ist. Die Bögenabschnitte sind entsprechend orientiert angeordnet.

Zielführend ist dabei, dass die gewünschte Position der Gebinde in der palettierfähigen Lage einstellbar ist, wobei alle Gebinde gemeinsam, also gleichzeitig freigegeben werden können, und so ausgerichtet gemeinsam in die Sammelstation gefördert werden. Dabei ist zweckmäßig, dass sich Gebinde, die freigegeben werden, bereits entlang des Rücktrums befinden, wobei andere Gebinde der palettierfähigen Lage zielführend noch an dem Hintrum befindlich sind.

Bei dieser Ausgestaltung kann also entlang des ersten Teilabschnittes des Hintrums ebenso eine Beschleunigung wie ein Ausrichten stattfinden, was auch für den zweiten Teilabschnitt des Hintrums gelten kann. Selbstverständlich kann auch entlang des ersten Teilabschnittes des Rücktrums ein Ausrichten, Beschleunigen und/oder Verzögern stattfinden, was so auch für die Ausführungsbeispiele zuvor gelten kann.

Die Erfindung wird im Folgenden anhand der in den Figuren gezeigten Ausführungsbeispiele näher erläutert. Es zeigen:
- Fig. 1: eine Palettiervorrichtung in Aufsicht in einer, nicht erfindungsgemäßen Ausgestaltung,
- Fig. 2: eine Palettiervorrichtung in Aufsicht in einer Ausgestaltung
- Fig. 3: eine Palettiervorrichtung in Aufsicht in einer weiter möglichen Ausgestaltung, und
- Fig. 4: die Palettiervorrichtung aus Figur 3 zur Darstellung unterschiedlicher Ausrichtpositionen.

In den unterschiedlichen Figuren sind gleiche Teile stets mit denselben Bezugszeichen versehen, weswegen diese in der Regel auch nur einmal beschrieben werden.

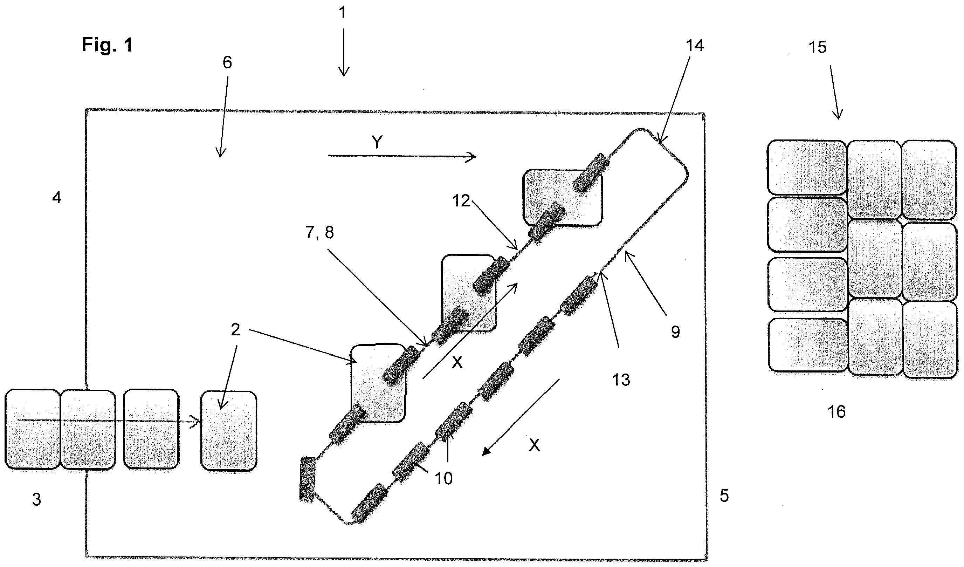

Figur 1 zeigt eine Palettiervorrichtung 1 welcher Gebinde 2 über ein Zuführelement 3 zugeführt werden, und welche ein von einer Eingangsseite 4 in Richtung zu einer Ausgangsseite 5 orientiert förderndes Förderband 6 sowie zumindest ein Ausrichtförderelement 7 aufweist. Das Ausrichtförderelement 7 ist als Lineartransporteur 8 mit einer geschlossenen Bewegungsbahn 9 ausgeführt ist, an welcher Bewegungselemente 10 im Wesentlichen in einer gemeinsamen Richtung (Pfeil X) umlaufen, wobei an dem jeweiligen Bewegungselement 10 Ausrichtelemente angeordnet sind. Die Ausrichtelemente können in der Form von Greifern ausgeführt sein, wobei an jedem Bewegungselement 10 zumindest ein Greifer und/oder mehrere Greifer angeordnet sein können.

Der Lineartransporteur 8 weist eine geschlossene Bewegungsbahn 9 auf, an welcher die einzelnen Bewegungselemente 10 angeordnet sind, welche im wesentlichen in einer gemeinsamen Richtung umlaufen.

Die Bewegungsbahn 9 weist dazu linear ausgerichtete Bewegungsbahnabschnitte 12,13 und dazwischen angeordnete Umlenkbereiche 14 auf, so dass eine geschlossene Bewegungsbahn 9 gebildet ist. Die linear ausgerichteten Bewegungsbahnabschnitte 12,13 können auch als Hintrum 12 oder Rücktrum 13 bezeichnet werden.

Der Lineartransporteur 8 ist in der Art einer elektromagnetischen Bahn ausgeführt, wobei die Bewegungselemente 10 getriebelos an dieser direkt ansteuerbar umlaufen, wobei die jeweils gewünschte Geschwindigkeit des jeweiligen Bewegungselementes 10 individuell ansteuerbar ist. Dazu ist eine Schnittstelle der Bewegungsbahn mit einer Steuereinheit verbindbar. Der Lineartransporteur 8 ist demnach ein elektromagnetischer Direktantrieb. Dabei erfolgt der eigentliche Antrieb durch ein dynamisch, steuerbares elektromagnetisches Feld entlang der Schiene oder Bahn, wodurch der auf dem Bewegungselement angeordnete Permanentmagnet/-packung durch die magnetische Kraft bzw. das Magnetfeld gesteuert bewegt wird.

Die an den Bewegungselementen 10 angeordneten Greifer können bezogen auf den Lineartransporteur 8 aber auch bezogen auf das Förderband 6 jede Bewegung ausführen, sind also entsprechend in ihren Freiheitgraden ansteuerbar. Ein Ansteuern erfolgt über in idealer Ausführung über eine zentrale Einheit, welche auch die Steuerung der Bewegungselemente 10 bewirkt.

In den Figuren 1 bis 4 ist erkennbar, dass ein einziger Lineartransporteur 8 die bisher erforderliche Mehrzahl an Lineareinheiten ersetzt, um die Gebinde 2 wunschgemäß zu palettieren, also ein Palettiermuster 15 zu erstellen. In diesem sind die einzelnen Gebinde unterschiedlich aber auch identisch angeordnet. Jede palettierfähige Lage ist bezogen auf die Orientierung der Gebinde individuell erstellbar.

Bei der in Figur 1 gezeigten Ausgestaltung ist der Lineartransporteur 8 zu der Eingangsseite 4 des Förderbandes 6 beabstandet. Die auf das Förderband 6 geführten Gebinde 2 werden mittels des Förderbandes 6 beschleunigt und so zu den folgenden Gebinden 2 beabstandet. Erreicht das betreffende Gebinde 2 den Lineartransporteur 8, übernimmt ein Bewegungselement 10, also der daran angeordnet Greifer das Gebinde 2 und fördert dieses entlang der Bewegungsbahn 9.

Bei der in Figur 1 dargestellten, nicht erfindungsgemäßen Ausgestaltung weist der Lineartransporteur 8 eine schräg zur Transportrichtung (Pfeil Y) des Förderbandes 6 ausgerichtete Orientierung auf. Dabei weist die Bewegungsbahn 9 den Hintrum 12 und den Rücktrum 13 sowie jeweils dazwischen angeordnete Umlenkbereiche 14 auf. Entlang des Hintrums 12 werden die Gebinde 2 in die gewünschte Position verbracht, welche diese in dem gewünschten Palettiermuster 15 einnehmen sollen. Hat das Gebinde 2 die gewünschte Position erreicht, wird das Gebinde 2 freigegeben und mittels des Förderbandes 6, welches z.B. als Mattenkette ausgeführt sein kann, zu einer Sammelstation 16 transportiert. Dabei können die Bewegungselemente 10, also auch deren Greifer so angesteuert werden, dass ein einzelnes oder mehrere Gebinde 2 gleichzeitig freigegeben werden können. Gemäß Figur 1 wird immer nur ein einzelnes Gebinde 2 freigegeben, wenn dieses die Lage und Position im Palettiermuster 15 erreicht hat.

Ist das Gebinde 2 freigegeben, wird das Bewegungselement 10, idealerweise entlang des Rücktrums 13 beschleunigt, um so ein weiteres Gebinde 2 übernehmen zu können.

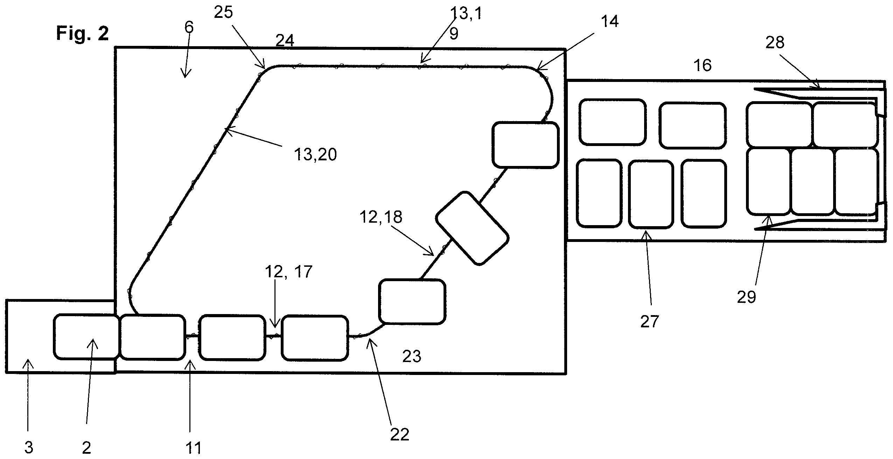

Bei der in Figur 2 gezeigten Ausgestaltung weist der Lineartransporteur 8, also seine Bewegungsbahn 9 den Hintrum 12 und den Rücktrum 13 auf, welche gemäß der Erfindung jeweils zumindest zwei Teilabschnitte 17,18 und 19,20 aufweisen. Ein erster Teilabschnitt 19 des Hintrums 12 beginnt an einem Einlauf 21 des Zuführelementes 3, und erstreckt sich bis zu einem Bogenabschnitt 22 parallel zu einer Längsseite 23 des Förderbandes 6, also der Maschenkette in Richtung zu der Ausgangsseite 5. An den Bogenabschnitt 22 schließt sich ein zweiter Teilabschnitt 18 an, welcher sich sodann schräg orientiert in Richtung zur gegenüberliegenden Längsseite 24 erstreckt. An diesen zweiten Teilabschnitt 18 schließt sich der erste Umlenkbereich 14 zum Rücktrum 13 an, so dass ein erster Teilabschnitt 19 des Rücktrum 13 parallel zu entsprechenden Längsseite 24 in Richtung zur Eingangsseite 3 verläuft. An diesen ersten Teilabschnitt 19 des Rücktrums 13 schließt sich wiederum ein Bogenabschnitt 25 an, an den sich ein zweiter Teilabschnitt 20 des Rücktrums 13 anschließt, welcher an dem zweiten Umlenkbereich 14 endet. Der zweite Teilabschnitt 20 des Rücktrums 12 ist schräg in Richtung zum ersten Teilabschnitt 17 des Hintrums 12 verlaufend orientiert. Die beiden zweiten Teilabschnitte 18, 20 weisen dabei einen Winkelbetrag zur jeweiligen Längsseite 23, 24 auf. Der zweite Teilabschnitt 20 des Rücktrum 13 ist also bevorzugt parallel zum zweiten Teilabschnitt 18 des Hintrums 12. Gleiches gilt für die ersten Teilabschnitte 17, 19 des Hin- und Rücktrums 12, 13. Der Lineartransporteur 8 gemäß dieser Ausgestaltung hat in Aufsicht gesehen eine quasi Parallelogramm ähnlich Form.

Der Lineartransporteur 8, also das jeweilige Bewegungselement 10 kann das jeweilige Gebinde 2 direkt von dem Zuführelement 2 am Einlauf 21 übernehmen. Möglich ist zunächst die Position des Gebindes 2 zu ermitteln, wozu Erfassungselemente 26, wie z.B. Beispiel Sensoren vorgesehen sein können. Diese können bevorzugt an dem Einlauf angeordnet sein, weswegen dieser Teilabschnitt des ersten Teilabschnittes 17 des Hintrums 12 auch als Erfassungsstrecke bezeichnet werden kann. Entlang des ersten Teilabschnittes 17 des Hintrums 12 können die Bewegungselemente 10 beschleunigt werden, so dass die Gebinde 2 zu den Folgenden beabstandet werden können, was in Figur 2 mittels der entstandenen Lücke 11 erkennbar ist.

Entlang des zweiten Teilabschnittes 18 des Hintrums 12 wird das Gebinde 2, wie erkennbar, in die gewünschte Position überführt, wobei aber auch noch eine Beschleunigung stattfinden kann. Hat das Gebinde 2 die gewünschte Position hinsichtlich der Ausrichtung und der Position in der späteren palettierfähigen Lage , also in dem gewünschten Palettiermuster 15 erreicht, lässt der Greifer das Gebinde 2 frei, so dass dieses mittels des Förderbandes 6, also mittels der beispielhaften Maschenkette zu der Sammelstation 16 an der Ausgangseite 5 gefördert wird. Auch hier kann ein einzelnes Gebinde 2 freigegeben werden, wobei aber auch mehrere Gebinde 2 gleichzeitig freigegeben werden können.

Nach dem die Gebinde 2 die Sammelstation erreicht haben, können diese zunächst in einer unverdichteten Lage 27 weitergefördert werden. Bevorzugt ist, dass Anschlags- und/oder Verdichtungselemente 28 vorhanden sind, so dass eine verdichtete Lage 29 (Palettiermuster 15) gebildet werden kann.

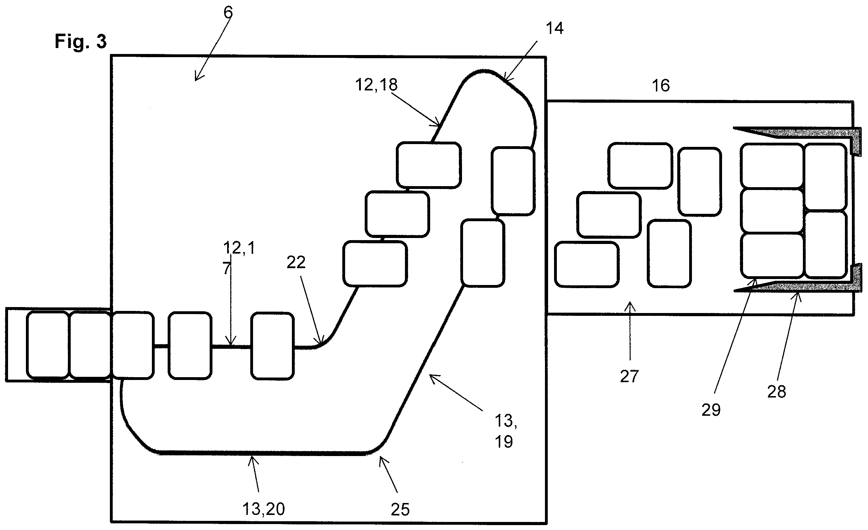

Bei der in Figur 3 dargestellten erfindungsgemäßen Ausgestaltung des Lineartransporteurs 8 weist dieser in Aufsicht gesehen eine umgekehrt L-förmige Ausgestaltung auf. Dabei kann vorgesehen sein, dass der Hintrum 12 kürzer ist als der Rücktrum 13. Wie zuvor beschrieben weisen bei diesem Ausführungsbeispiel nach Figur 3 sowohl der Hintrum 12 als auch der Rücktrum 13 jeweils zwei Teilabschnitte 17, 18, 19, 20 auf, zwischen denen Bogenabschnitte 22, 24 angeordnet sind. Im Unterschied zu den zuvor genannten Ausführungsbeispielen, ist der erste Teilabschnitt 17 des Hintrums 12 parallel zu dem zweiten Teilabschnitt 20 des Rücktrums 13, wobei der zweite Teilabschnitt 18 des Hintrums 12 parallel zu dem ersten Teilabschnitt 19 des Rücktrum 13 ist. Die Bögenabschnitte 22, 24 sind entsprechend orientiert angeordnet.

Zielführend ist dabei, dass die gewünschte Position der Gebinde 2 in der palettierfähigen Lage, also in dem Palettiermuster 15 einstellbar ist, wobei alle Gebinde 2 gemeinsam, also gleichzeitig freigegeben werden können, und so ausgerichtet gemeinsam in die Sammelstation 16 gefördert werden. Dabei ist zweckmäßig, dass sich Gebinde 2, die freigegeben werden bereits entlang des Rücktrums 13 befinden, wobei andere Gebinde 2 der palettierfähigen Lage zielführend noch an dem Hintrum 12 befindlich sind.

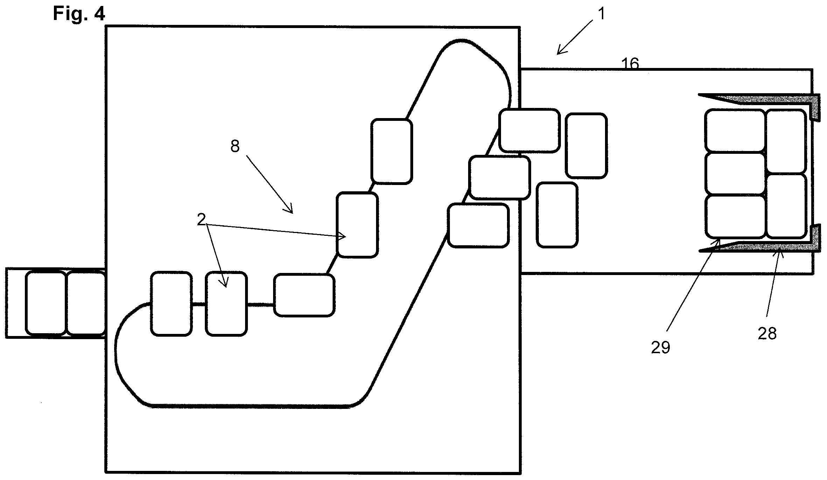

In Figur 4 ist erkennbar, wie die freigegebenen Gebinde 2 in Richtung zur Sammelstation 16 gefördert werden, wobei bereits eine unverdichtete Lage 27 und eine verdichtete Lage 29 vorhanden sind. Erkennbar ist, dass gleichzeitig mit Freigabe der Gebindes 2 in der Position des Palettiermusters 15 entlang des Hintrums 12 bereits Gebinde neu ausgerichtet sind, welche bei Erreichen des gewünschten Position im Palettiermuster 15 (also am Rücktrum 13) zusammen mit den bisher noch nicht ausgerichteten Gebinden 2, freigegeben werden, wenn diese dann auch ausgerichtet sind.

In den vorgenannten Ausführungsbeispielen ist der Lineartransporteur 8 als geschlossene Bewegungsbahn 9 ausgeführt, die vollständig parallel bzw. in den Bahnabschnitten, bei welchen die Gebinde oder Behälter geführt werden parallel zu und oberhalb von der Transportebene der Gebinde angeordnete ist bzw. verläuft.

Die gezeigten Palettiermuster 15 sind natürlich anpassbar, so dass die dargestellte Ausrichtung und Anordnung der Gebinde 2 in dem Palettiermuster nur beispielhaft sein soll. Insbesondere ist es möglich auf einer Palette unterschiedliche Palettiermuster zu generieren.

### Bezugszeichenliste:

- 1: Palettiervorrichtung
- 2: Gebinden
- 3: Zuführelement
- 4: Eingangsseite
- 5: Ausgangsseite
- 6: Förderband/Maschenkette
- 7: Ausrichtförderelement
- 8: Lineartransporteur
- 9: Bewegungsbahn
- 10: Bewegungselement
- 11: Lücke zwischen 2
- 12: Hintrum
- 13: Rücktrum
- 14: Umlenkbereiche
- 15: Palettiermuster
- 16: Sammelstation
- 17: erster Teilabschnitt von 12
- 18: zweiter Teilabschnitt von 12
- 19: erster Teilabschnitt von 13
- 20: zweiter Teilabschnitt von 13
- 22: Bogenabschnitt
- 23: Längsseite
- 24: Längsseite
- 25: Bogenabschnitt
- 26: Erfassungselemente
- 27: unverdichtete Lage
- 28: Anschlags- und/oder Verdichtungselemente
- 29: verdichtete Lage

## Patentansprüche

1. Vorrichtung zum Palettieren, welcher Gebinde (2) über ein Zuführelement (4) zugeführt werden, und welche ein von einer Eingangsseite (4) in Richtung zu einer Ausgangsseite (5) orientiert förderndes Förderband (6) sowie zumindest ein Ausrichtförderelement (7,8) aufweist, wobei das Ausrichtförderelement (7) als Lineartransporteur (8) mit einer geschlossenen Bewegungsbahn (9) ausgeführt ist, die einen Hintrum (12) und einen Rücktrum (13) aufweist, und an welcher Bewegungselemente (10) im Wesentlichen in einer gemeinsamen Richtung (X) umlaufen, wobei an dem jeweiligen Bewegungselement (10) Ausrichtelemente angeordnet sind, **dadurch gekennzeichnet, dass** der Lineartransporteur (8) als elektromagnetischer Direktantrieb ausgeführt ist, und dass der Lineartransporteur (8) sowohl an seinem Hintrum (12) als auch an seinem Rücktrum (13) zwei Teilabschnitte (17,18; 19,20) aufweist, zwischen denen jeweils Bogenabschnitte (22,25) angeordnet sind.

2. Vorrichtung nach Anspruch 1, **dadurch gekennzeichnet, dass** zwischen dem Hintrum (12) und dem Rücktrum (13) Kurvenbereiche (14) angeordnet sind.

3. Vorrichtung nach einem der vorhergehenden Ansprüche, **dadurch gekennzeichnet, dass** die an den Bewegungselementen (10) angeordneten Ausrichtelemente bezogen auf den Lineartransporteur (8), aber auch bezogen auf das Förderband (6) frei beweglich sind.

4. Vorrichtung nach einem der vorhergehenden Ansprüche, **dadurch gekennzeichnet, dass** der Lineartransporteur (8) eine schräg zur Transportrichtung (Y) des Förderbandes (6) ausgerichtete Orientierung aufweist.

## Claims

1. Device for palleting, to which packages (2) are supplied by way of a supply element (3), and which comprises a conveyor belt (6) for oriented conveying from an input side (4) in the direction to an output side (5), as well as at least one aligning conveying element (7, 8), wherein the aligning conveying element (7) is configured as a linear transporter (8) with a closed movement path (9), which comprises an outgoing side (12) and a return side (13), and on which movement elements (10) circulate essentially in a common direction, wherein alignment elements are arranged at the respective movement element (10), **characterised in that** the linear transporter (8) is configured as an electromagnetic direct drive, and that the linear transporter (8) comprises, both on its outgoing side (12) as well as on its return side (13), two part sections (17, 18; 19, 20), arranged between which in each case are bend sections (22, 25).

2. Device according to claim 1, **characterised in that** deflection areas (14) are arranged between the outgoing side (12) and the return side (13).

3. Device according to any one of the preceding claims, **characterised in that** the alignment elements arranged at the movement elements (10) are freely movable related to the linear transporter (8), but also related to the conveyor belt (6).

4. Device according to any one of the preceding claims, **characterised in that** the linear transporter (8) exhibits an orientation aligned obliquely to the transport direction of the conveyor belt (6).

## Revendications

1. Dispositif de palettisation, auquel sont amenés des emballages (2) par le biais d'un élément d'alimentation (4) et qui présente une bande de transport (6) transportant de manière orientée depuis un côté d'entrée (4) en direction d'un côté de sortie (5), ainsi qu'au moins un élément de transport d'orientation (7, 8), dans lequel l'élément de transport d'orientation (7) est réalisé comme un transporteur linéaire (8) avec une bande de déplacement fermée (9), qui présente un brin aller (12) et un brin retour (13), et sur laquelle des éléments de déplacement (10) tournent sensiblement dans un sens commun (X), dans lequel des éléments d'orientation sont agencés sur l'élément de déplacement (10) respectif, **caractérisé en ce que** le transporteur linéaire (8) est réalisé comme entraînement direct électromagnétique et **en ce que** le transporteur linéaire (8) présente, non seulement sur son brin aller (12) mais aussi sur son brin retour (13), deux sections partielles (17, 18 ; 19, 20), entre lesquelles respectivement des sections arquées (22, 25) sont agencées.

2. Dispositif selon la revendication 1, **caractérisé en ce que** des zones courbées (14) sont agencées entre le brin aller (12) et le brin retour (13).

3. Dispositif selon l'une quelconque des revendications précédentes, **caractérisé en ce que** les éléments d'orientation agencés sur les éléments de déplacement (10) sont mobiles librement par rapport au transporteur linéaire (8) mais aussi à la bande de transport (6).

4. Dispositif selon l'une quelconque des revendications précédentes, **caractérisé en ce que** le transporteur linéaire (8) présente une orientation orientée en biais par rapport au sens de transport (Y) de la bande de transport (6).
